(19) Europäisches Patentamt
European Patent Office
Office européen des brevets

(11) Publication number: 0 010 590 B1

(12) EUROPEAN PATENT SPECIFICATION

(45) Date of publication of patent specification: 12.01.83 (51) Int. Cl.³: C 08 G 79/02

(21) Application number: 79103275.8

(22) Date of filing: 05.09.79

(54) **Polyphosphazene copolymers containing a substituent bonded to phosphorus through a carbon atom, and their preparation.**

(30) Priority: 08.09.78 US 941109
08.09.78 US 941117
20.10.78 US 953281

(43) Date of publication of application:
14.05.80 Bulletin 80/10

(45) Publication of the grant of the patent:
12.01.83 Bulletin 83/2

(84) Designated Contracting States:
BE DE FR GB IT NL SE

(56) References cited:
DE - A - 2 821 013
US - A - 3 169 933
US - A - 3 370 020
US - A - 4 129 529

(73) Proprietor: THE FIRESTONE TIRE & RUBBER COMPANY
1200 Firestone Parkway
Akron, Ohio 44317 (US)

(72) Inventor: Hergenrother, William Lee
195 Dorchester Road
Akron, Ohio 44313 (US)
Inventor: Halasa, Adel Farhan
5040 Everett Road
Bath, Ohio 44210 (US)

(74) Representative: Kraus, Walter, Dr. et al,
Patentanwälte Dres. Kraus & Weisert
Irmgardstrasse 15
D-8000 München 71 (DE)

EP 0 010 590 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Polyphosphazene copolymers containing a substituent bonded to phosphorus through a carbon atom, and their preparation

This invention relates to polyphosphazene copolymers containing repeating

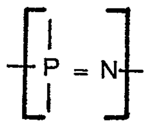

units in the polymer chain in which a substituent is attached or bonded to the phosphorus atom through a carbon atom. More particularly, the invention relates to polyphosphazene copolymers containing a substituent derived from a malononitrile or substituted malononitrile compound or nitroalkyl compound or sulfone compound and a substituent which may be a substituted or unsubstituted alkoxy, alkenyloxy, aryloxy, alkenylaryloxy, amino or mercapto group.

Polyphosphazene polymers containing repeating

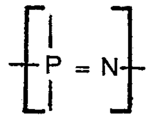

units in which various substituted and unsubstituted alkoxy, aryloxy, amino and mercapto groups are attached to the phosphorus atom and their method of preparation are described in the prior art as illustrated in the publication "Phosphorus-Nitrogen Compounds", by H. R. Allcock and "Poly(Organophosphazenes)", Chemtech, September 19, 1975 by H. R. Allcock and in US—A— 3,515,688; 3,702,833; 3,856,712; 3,974,242; and 4,042,561.

However, none of the aforementioned publications or patents or for that matter none of the prior art of which applicants were aware, discloses or suggests polyphosphazene copolymers containing a substituent bonded to the phosphorus atom through carbon such as a malononitrile substituent, a nitroalkyl substituent or a sulfone substituent or methods of preparing such copolymers.

In accordance with this invention, polyphosphazene copolymers containing malononitrile or substituted malononitrile or nitroalkyl or sulfone substituents and substituted or unsubstituted alkoxy, alkenyloxy, aryloxy, alkenylaryloxy, amino and mercapto substituents are prepared.

The copolymers of the invention are characterized by containing units represented by the formulas:

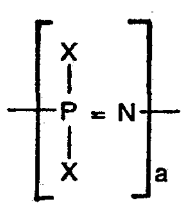 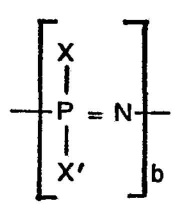 and 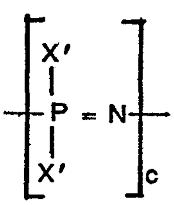

wherein X is a $—CR(CN)_2$ radical or a $—CNO_2R_1R_2$ radical or a sulfone radical selected from the group consisting of

$—CR_4R_5—SO_2—R_3$ and $—CHCH=CHCH_2SO_2$

in which R is H, a branched chain, a straight chain or cyclic alkyl group containing from 1 to 12 carbon atoms or an aryl group or mixtures thereof, $R_1$ and $R_2$ are selected from the group consisting of H, a branched, straight chain and cyclic alkyl group containing from 1 to 12 carbon atoms or mixtures thereof, $R_3$ is alkyl containing from 1 to 12 carbon atoms, cycloalkyl containing from 3 to 12 carbon atoms or aryl and $R_4$ and $R_5$ are individually selected from the group consisting of hydrogen, alkyl radicals containing from 1 to 11 carbon atoms, cycloalkyl radicals containing from 3 to 11 carbon atoms and aryl radicals; wherein X' is an organic radical selected from the group consisting of substituted and unsubstituted alkoxy, alkenyloxy, aryloxy, alkenylaryloxy, amino and mercapto groups and wherein $20 \leq (a + b + c) \leq 50{,}000$ per polymer; and the copolymer containing at least 5 mole percent by weight of the X substituent.

In the copolymer units represented by the above formulas, all X substituent groups may be the same or they may be mixed and all X' substituent groups may be the same or mixed. In the mixtures, the X substituent groups may be mixtures of different $—CR(CN)_2$ radicals or different $—CNO_2R_1R_2$ radicals or different sulfone radicals

$$\text{(i.e., } —CR_4R_5SO_2—R_3 \text{ or } —CHCH{=}CHCH_2SO_2 \text{ radicals)}$$

and the X' substituent groups may be mixtures of alkoxy, aryloxy, alkenyloxy, alkenylaryloxy, amino and mercapto groups or mixtures within each group.

The specific proportion of X to X' substituent groups incorporated in the polymers of the invention may vary considerably depending upon the specific X and X' groups utilized, the chemical and physical properties desired in the copolymer and the particular end use for which the copolymer is intended.

The inventive copolymers contain at least 5 mole percent by weight of the X substituent to be useful for applications such as moldings, coatings and foams.

The inventive copolymers are prepared by a process which is characterized by reacting a poly-(dichlorophosphazene) polymer having the formula $—(NPCl_2)_n—$, wherein n is from 20 to 50,000, with a mixture consisting of a malonitrile or substituted malonitrile compound or a nitroalkane compound or a sulfone compound and an aliphatic alcohol, phenol, amine or mercaptan or mixture thereof, in the presence of a tertiary amine.

Copolymers containing substituent groups derived from malonitrile or sulfone compounds may alternatively be prepared by utilizing the prior art sodium processes described in the aforementioned US—A—3,515,688; 3,702,833; 3,856,712; and the Allcock articles.

The term "copolymer" as employed hereinafter throughout the specification and claims is utilized in its broadest sense and includes polyphosphazene copolymers, terpolymers, tetrapolymers and the like.

I. The Poly(Dichlorophosphazene) Polymer

Poly(dichlorophosphazene) polymers which are employed as starting materials in preparing the copolymers of this invention are well known in the art as illustrated US—A— 3,370,020; 4,005,171; and 4,055,520.

These polymers have the general formula $—(NPCl_2)_n—$, in which n may range from 20 to 50,000 or more. As described in the aforementioned references, the polymers are in general prepared by the thermal polymerization of cyclic oligomers having the formula $—(NPCl_2)_{n'}—$, in which n' is an integer of from 3 to 7, with the cyclic trimer and tetramer often comprising up to 90% of the oligomers.

The specific conditions of temperature, pressure and time employed in the thermal polymerization of the cyclic oligomers can vary considerably depending on whether or not the polymerization is catalyzed. Thus, temperatures may range from about 130°C to about 300°C, pressures may range from a vacuum of less than about 1.33 mbar ($10^{-1}$Torr) to superatmospheric and times may range from 30 minutes to about 48 hours.

A preferred process for preparing the poly(dichlorophosphazene) polymers used in the process of this invention is described in the aforementioned US—A—4,005,171.

II. The Malononitrile, Nitroalkane and Sulfone Substituents (i.e., X Substituents)

The malononitriles and substituted malononitriles which may be employed in forming the copolymers of the invention are the malononitriles of the general formula $CR_2(CN)_2$ where R may be H, a branched, straight chain or cyclic alkyl radical with from 1 to 12 carbon atoms or an aryl radical. The R radicals may vary from one site to another in the malononitrile or may be identical at each site. Illustrative examples of the malononitriles and substituted malononitriles which may be suitably employed are malononitrile, methyl malononitrile, ethyl malononitrile, hexyl malononitrile and phenyl malononitrile.

The nitroalkanes which may be employed in forming the copolymers of the invention are the nitroalkanes of the general formula $O_2NCHR_1R_2$ where $R_1$ and $R_2$ may be H, a branched, straight chain or cyclic alkyl radical with from 1 to 12 carbon atoms. $R_1$ and $R_2$ may vary from site to another in the alkane or may be identical at each site. Illustrative examples of the nitroalkanes which may be suitably employed are 2-nitropropane, nitromethane, alpha nitrotoluene, 3-nitropentane and 2-nitrobutane.

As indicated above, the sulfone substituent groups of the copolymers of the invention are sulfone radicals represented by the formulas

$$—CR_4R_5—SO_2—R_3 \text{ and } —CHCH{=}CHCH_2SO_2$$

in which $R_3$, $R_4$ and $R_5$ are as previously defined. Such sulfone radicals may be derived from sulfone compounds represented by the formulas

$$HCR_4R_5-SO_2-R_3 \text{ and } CH_2CH{=}CHCH_2SO_2$$

wherein $R_3$, $R_4$ and $R_5$ are as defined above.

The presence of the $-SO_2-$ group in such sulfone compounds renders any hydrogen atoms bonded to a saturated carbon atom which is adjacent to the sulfone group acidic and, therefore, capable of reaction with the chlorine atoms of the poly(dichlorophosphazene) when reacted therewith in the presence of an acidic or basic catalyst. The reaction scheme utilizing dimethyl sulfone for illustrative purposes is believed to proceed as follows:

$$CH_3SO_2CH_3 \underset{(H^+)}{\overset{Base}{\rightleftharpoons}} -CH_2SO_2CH_3$$

Illustrative examples of sulfone compounds from which sulfone substituent groups of the copolymers may be derived include 2,5-dihydrothiophene 1,1-dioxide (butadiene sulfone) which may be represented by the formula

$$CH_2CH{=}CHCH_2SO_2$$

or structurally as

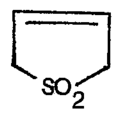

dialkyl sulfones such as dimethyl sulfone, diethyl sulfone, di-n-butyl sulfone, di-n-propyl sulfone, dihexyl sulfone and dioctyl sulfone; cycloalkyl sulfones such as cyclopropyl methyl sulfone, cyclohexyl methyl sulfone, and cyclopentyl methyl sulfone and aryl sulfones such as dibenzyl sulfone and phenyl methyl sulfone.

Preferred sulfone compounds for use in preparing the copolymers of the invention are dialkyl sulfones, especially dimethyl sulfone and butadiene sulfone.

The presence of the sulfone substituent group in the copolymers of the invention should provide for improved thermal stability and solvent resistance in the polymeric product.

III. The Alkoxy, Alkenyloxy, Aryloxy, Alkenylaryloxy, Amino and Mercapto Substituents (i.e., X′ Substituents)

As indicated heretofore, the polyphosphazene copolymers of the invention in addition to the X substituent group (i.e. malononitrile, nitroalkyl or sulfone) may contain as the X′ substituent substituted or unsubstituted alkoxy, alkenyloxy, aryloxy, alkenylaryloxy, amino or mercapto groups.

The alkoxy groups (substituted or unsubstituted) may be derived from aliphatic alcohols having from 1 to 20 carbon atoms such as methanol, ethanol, propanol, isopropanol, n-butanol, sec-butanol, hexane and dodecanol; fluoroalcohols, especially those represented by the formula $Z(CF_2)_mCH_2OH$ in which Z is hydrogen or fluorine and m is an integer from 1 to 10 as illustrated by trifluoroethanol, 2,2,3,3,3-pentafluoropropanol, 2,2,3,3,4,4,4-heptafluorobutanol, 2,2,3,3-tetrafluoropropanol, 2,2,3,3,4,4,5,5-octafluoropentanol and 2,2,3,3,4,4,5,5,6,6,7,7-dodecafluoroheptanol. In instances where it is desired to incorporate mixed X′ substituent groups in the copolymers, mixtures of the foregoing alcohols may be employed.

The alkenyloxy groups (i.e. oxy radicals of alkenyl compounds) may be derived from unsaturated aliphatic alcohols such as allyl alcohol, 3-butene-1-ol and 2,3,3-fluoropropen-1-ol.

The aryloxy groups (substituted or unsubstituted) may be derived from phenols including among others phenol; alkylphenols such as cresols, xylenols, p-, o-, and m-ethyl and propyl phenols; halogen-substituted phenols such as p-, o-, and m-chloro and bromo phenols and di- or tri-halogen substituted phenols; and alkoxy-substituted phenols such as 4-methoxyphenol and 4-(n-butoxy) phenol. Mixtures of the foregoing phenols may also be employed.

The alkenylaryloxy (i.e., alkenyl-substituted aryloxy) group may be derived from unsaturated phenols such as vinylphenols, allylphenols, eugenol and isoeugenol.

The amino groups may be derived from any of the amino compounds heretofore employed in the polyphosphazene polymer art. Thus, the amino groups may be derived from aliphatic primary and secondary amines such as methylamine, ethylamine, dimethylamine and ethylmethylamine and aromatic amines such as those described in US—A— 4,042,561, as illustrated by aniline, halogen-substituted anilines, alkyl-substituted anilines and alkoxy-substituted anilines.

The preferred substituent groups represented by X′ for use in the copolymers of the invention are alkoxy groups, especially fluoroalkyl groups, and aryloxy groups, especially chlorophenoxy groups.

As mentioned heretofore, the copolymers of the invention are preferably prepared by reacting the poly(dichlorophosphazene) polymer, with a mixture of the malononitrile or nitroalkane or sulfone compound and other desired reactants (e.g. aliphatic or aromatic alcohol, amino compound, mercaptan compound etc.) in the presence of a tertiary amine.

IV. The Tertiary Amine

The use of the tertiary amine in preparing the copolymers of the invention minimizes undesirable side reactions and at the same time acts as an effective acid scavenger.

Tertiary amines which may be employed in preparing the copolymer of the invention are those represented by the general structure:

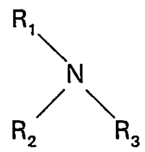

wherein $R_1$, $R_2$, and $R_3$ may each be alkyl containing from 1 to 8 carbon atoms. Thus, for example, the tertiary amine may be a trialkyl amine such as trimethylamine, triethylamine, tri-isopropylamine, tri-n-propylamine, tri-isobutylamine and tri-n-butylamine. In addition, tertiary amines such as pyridine, N,N,N',N'-tetramethylethylene diamine (TMEDA), dipipyridyl ethane, 1,4 diaza bicyclo (2·2·2) octane (DABCO), n-methyl pyrolle and N-methyl morpholine can also be utilized.

The preferred tertiary amines for use in preparing the copolymers of the invention are triethylamine, N,N,N',N'-tetramethylethylene diamine and pyridine.

The specific reaction conditions and proportion of ingredients employed in preparing these copolymers can vary somewhat depending on factors such as the reactivity of the specific substituent or substituent mixture utilized, the particular tertiary amine employed, and the degree of substitution desired in the finished polymer. In general, reaction temperatures may range from about 25°C to about 200°C and times may range from 3 hours up to 7 days; lower temperatures necessitating longer reaction times and higher temperatures allowing shorter reaction times. These conditions are, of course, utilized in order to obtain the most complete reaction possible, i.e., in order to insure substantially complete conversion of the chlorine atoms in the polymer to the corresponding ester of the substituent mixture.

The above reaction is ordinarily carried out in the presence of a solvent. The solvent or solvent mixture employed in the reaction should be a solvent for the poly(dichlorophosphazene) polymer, the substituent mixture and the tertiary amine.

In addition, the materials in the reaction zone should be reasonably free of water, most preferably containing 0.01 percent by weight of water or less. The prevention of water in the reaction system is necessary in order to inhibit the reaction of the available chlorine atoms in the chloropolymer therewith. Examples of suitable solvents which may be employed include diglyme, triglyme, tetraglyme, toluene, xylene, cyclohexane, chloroform, dioxane, dioxalene, methylene chloride, tetrachloroethane, and tetrahydrofuran. The amount of solvent or solvent mixture employed is not critical and any amount sufficient to solubilize the reaction mixture materials can be employed.

In general, the amount of the substituent mixture employed in the process should be at least molecularly equivalent to the number of available chlorine atoms in the polymer mixture. However, if desired, an excess of such compounds may be employed in order to insure substantially complete reaction of all the available chlorine atoms.

The following examples are submitted of the purpose of further illustrating the nature of the present invention and is not intended as a limitation on the scope thereof. Parts and percentages referred to in the examples are by weight unless otherwise indicated.

Example 1

Preparation of 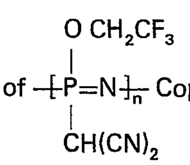 Copolymer

4.95 g of a 50% sodium dispersion in 120 ml of dry pentane (yielding 2.48 g, 107.7 millimoles of sodium) and 150 ml of dry tetrahydrofuran (hereinafter THF) were charged into a 828 ml (28 ounce) beverage bottle in a water bath. After stirring and a sodium purge, a solution of 7.50 g (113.5 millimoles) of malononitrile in 100 ml of dry THF was added. The water bath was held at 30—40°C during this addition and then was heated to 70°C which permitted the pentane-water azeotrope to dry the solution.

After cooling 44.0 ml of 2.58 mole sodium trifluoroethoxide (113.5 millimoles) and then 141.7 g of a 8.83% THF solution of poly(dichlorophosphazene), 12.51 g (108.0 millimoles) was added after the water bath was heated at 80°C for 20 hours and cooled, no PCL bonds could be detected by infrared spectroscopy. The resulting product was isolated by centrifugation treatment with carbon dioxide, a 10% sodium bromide and a hexane coagulation. The dry polymer from the soluble portion was 10.1 g of a rubber. Water washing the salt layer gave 9.8 g of solid polymer that had 1.03% Cl, 2.23% sodium, A Tg of 35°C and a Tm of 227°C. The polymer showed a 10% weight loss after aging 14 days at 149°C (300°F).

The THF soluble polymer yielded the following analysis. This is shown below along with the calculated analysis based on 96.6% trifluoroethoxide and 7.0% malononitrile in the polymer.

| | C | H | N | P | Cl |
|---|---|---|---|---|---|
| Found (%) | 22.69 | 2.02 | 7.50 | 10.97 | 0.20 |
| Calculated (%) | 21.20 | 1.70 | 8.14 | 13.04 | 0 |

Example 2

This product was also prepared in 100 ml of THF with 2.71 ml (44 millimoles) malononitrile, 12.3 ml (88 millimoles) of triethylamine, 3.2 (44 millimoles) of trifluoroethanol, and 57.9 g of a 8.0% THF solution of poly(dichlorophosphazene) (40.0 millimoles). After 64 hours in a 70°C rotary bath, a total of 8.0 g of THF insoluble powder was isolated which formed a film when pressed at 150°C for 30 seconds at 138 bar (2000 psi). This product had a Tg of 36°C and a Tm of 184°C.

Example 3

Preparation of $-[(CH(CN)_2)(ClC_6H_4O)PN]_n-$ Copolymer

To a 300 ml (10 ounce) beverage bottle was charged 2.90 g (44 millimoles) of malononitrile, 100 ml of alcohol free, dry chloroform, 5.66 g (44 millimoles) of p-chlorophenol, 12.3 ml (88 millimoles) of triethylamine and 56.6 g of an 8.35% cyclohexane solution of poly(dichlorophosphazene), 40.1 millimoles having a degree of polymerization of about 1600. After 20 hrs. in a 120°C rotary bath, no soluble phosphazene linkage could be detected by Infrared spectroscopy.

Washing with methanol gave 9.3 g of a red plastic that could be pressed into a smooth film at 225°C under pressure of 138 bar (2000 psi).

Example 4

Preparation of 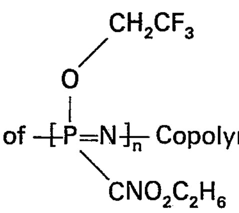 Copolymer

To a 300 ml (10 ounce) beverage bottle was charged 4.0 ml (44 millimoles) of 2-nitropropane, $C_3H_7NO_2$, 100 ml of dry tetrahydrofuran (hereinafter THF), 12.3 ml (88 millimoles) of triethylamine, 3.2 ml (44 millimoles) of trifluoroethanol, and 52.5 g of a 8.83% THF solution of poly(dichlorophosphazene) (40.0 millimoles) having a degree of polymerization of about 2600. After 20 hours at 80°C in a rotary bath and cooling, no PCL bonds could be detected by Infrared spectroscopy.

Coagulation in hexane yielded 5.4 g of a tan powder.

An analysis of the polymeric product showed the following results:

| C | H | N | P | Cl |
|---|---|---|---|---|
| 19.75% | 3.97% | 11.72% | 18.64% | 2.42% |

From this a composition of 9.3% triethylamine hydrochlorate, 26.8% hydrolyzed chloropolymer, 42.8% trifluoro derivative and 19.1% of the 2-nitropropane derivative was calculated with the corresponding results:

| C | H | N | P | Cl |
|---|---|---|---|---|
| 19.65% | 3.56% | 11.83% | 18.63% | 2.47% |

The solid polymer when pressed at 175°C under a pressure of 138 bar (2000 psi) formed a smooth, clear continuous film.

### Example 5

Preparation of 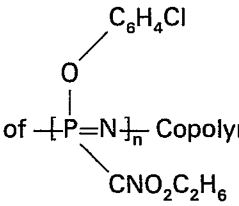 Copolymer

To a 300 ml (10 ounce) beverage bottle was charged 4.0 ml (44 millimoles) of 2-nitropropane, $C_3H_7NO_2$, 100 ml of dry, alcohol free chloroform, 12.3 ml (88 millimoles) of triethylamine, 5.66 g (44 millimoles) of p-chlorophenol, and 55.6 g of an 8.35% cyclohexane solution of poly(dichlorophosphazene) (40.1 millimoles) having a degree of polymerization of about 2600. After 20 hours at 120°C in an oven, a black viscous solution with some triethylammonium chloride crystals was obtained. Infrared spectroscopy showed no PCL bond at 600 $cm^{-1}$ and a new bond at 528 $cm^{-1}$.

Water extraction of the salt and then coagulation in methanol and drying gave 9.1 g of a black rubber.

### Example 6

Preparation of $[(CH_3SO_2CH_2)(CF_3CH_2O)PN]$ Copolymer

To a 300 ml (10 oz) bottle was added 100 ml of dry tetrahydrofuran (hereinafter THF), 12.3 ml (88 millimoles) of dry triethylamine, 4.14 g (44 millimoles) of dimethylsulfone, 3.2 ml (44 millimoles) of trifluoroethanol and 30.5 g of a 15.3 percent solids solution of poly(dichlorophosphazene), having a degree of polymerization of about 2600, in THF. The reaction mixture was heated at 120°C for 20 hours at which time triethylamine hydrochloride precipitated from solution. The polymer solution was subjected to Infrared Spectroscopy (hereinafter IR) and showed virtually no P—Cl band at 600 $cm^{-1}$ indicating excellent conversion. Coagulation in hexane produced 5.1 g of a tan powder.

A sample of the polymer powder when pressed at 150°C under pressure of 8.28 bar (120 psi) resulted in the production of a hard film.

A sample of the polymer was analyzed and showed the following:

| | %C | %H | %N | %P | %Cl | %S |
|---|---|---|---|---|---|---|
| Actual | 19.20 | 2.04 | 7.64 | 14.88 | 1.29 | 1.67 |
| Calculated* | 19.19 | 2.40 | 7.28 | 15.02 | 1.30 | 1.64 |

*Based upon 4.82% triethylamine hydrochloride, 10.9% hydrolyzed chloropolymer, 78.17% trifluoroethanol derivative, and 5.1% dimethyl sulfone derivative.

### Example 7

Preparation of $[(CH_3SO_2CH_2)(p\text{-}ClC_6H_5O)PN]$ Copolymer

To a 300 ml (10 oz.) bottle was added 100 ml of THF, 4.14 g (44 millimoles) of dimethyl sulfone ($CH_3SO_2CH_3$), 4.43 ml (44 millimoles) of p-chlorophenol, 12.3 ml (88 millimoles) of triethylamine and 35.3 g (39.6 millimoles) of a 13.0 percent solids solution of the poly(dichlorophosphazene) of Example 1 in THF. The reaction mixture was heated at 120°C for 20 hours at which time triethylamine hydrochloride precipitated from solution. The polymer solution was subjected to IR and showed no P—Cl band at 600 $cm^{-1}$ indicating excellent conversion. New bands were observed at 566, 539, 498, and 467 $cm^{-1}$. Coagulation in methanol produced 7.23 g of a white rubber polymer product.

### Example 8

Preparation of $[NP(OCH_2CF_3)(CHCH{=}CHCH_2SO_2)]$ Copolymer

To a 300 ml (10 oz.) bottle was added 100 ml of THF, 5.21 g (44 millimoles) of 2,5-dihydrothiophene 1,1-dioxide (3-sulfolene or butadiene sulfone), 3.2 ml (44 millimoles) of trifluoroethanol, 12.3 ml (88 millimoles) of triethylamine, and 42.3 g (39.9 millimoles) of a 10.93 percent solids solution of poly(dichlorophosphazene) in THF. The reaction mixture was heated at 80°C for 68 hours. The polymer solution was subjected to IR and showed new bands at 587, 562 and 538 $cm^{-1}$. The 587 $cm^{-1}$ band interfered to some degree with the precise determination of residual P—Cl band at 600 $cm^{-1}$ but no evidence of this absorption was evident. Coagulation in methanol resulted in the production of 5.83 g of a black powder.

## Claims

1. A polyphosphazene copolymer characterised by containing units represented by the formulas:

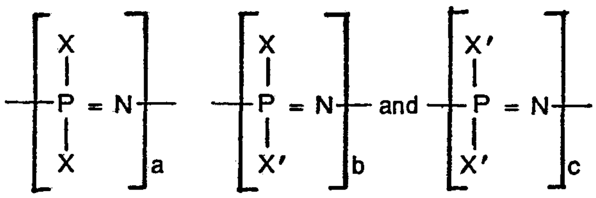

wherein X is a $—CR(CN)_2$ radical or a $—CNO_2R_1R_2$ radical or a sulfone radical selected from the group consisting of

$$—CR_4R_5—SO_2—R_3 \text{ and } —CHCH{=}CHCH_2SO_2$$

in which R is H, a branched chain, a straight chain or cyclic alkyl group containing from 1 to 12 carbon atoms or an aryl group or mixtures thereof, $R_1$ and $R_2$ are selected from the group consisting of H, a branched, straight chain and cyclic alkyl group containing from 1 to 12 carbon atoms or mixtures thereof, $R_3$ is alkyl containing from 1 to 12 carbon atoms, cycloalkyl containing from 3 to 12 carbon atoms or aryl and $R_4$ and $R_5$ are individually selected from the group consisting of hydrogen, alkyl radicals containing from 1 to 11 carbon atoms, cycloalkyl radicals containing from 3 to 11 carbon atoms and aryl radicals; wherein X' is an organic radical selected from the group consisting of substituted and unsubstituted alkoxy, alkenyloxy, aryloxy, alkenylaryloxy, amino and mercapto groups and wherein $20 \leq (a + b + c) \leq 50{,}000$ per polymer; and the copolymer containing at least 5 mole percent by weight of the X substituent.

2. The copolymer of claim 1 wherein X is $—CR(CN)_2$.

3. The copolymer of claim 2 wherein the X substituent is $—CH(CN)_2$ and the X' substituent is $—OCH_2CF_3$.

4. The copolymer of claim 2 wherein the X substituent is $—CH(CN)_2$ and the X' substituent is $—OC_6H_4Cl$.

5. The copolymer of claim 1 wherein X is $—CNO_2R_1R_2$.

6. The copolymer of claim 5 wherein the X substituent is $—CNO_2(CH_3)_2$ and the X' substituent is $—OCH_2CF_3$.

7. The copolymer of claim 1 wherein the X substituent is $—CNO_2(CH_3)_2$ and the X' substituent is $—OC_6H_4Cl$.

8. The copolymer of claim 1 wherein X is

$$—CR_4R_5—SO_2—R_3 \text{ or } —CHCH{=}CHCH_2SO_2.$$

9. The copolymer of claim 8 wherein X is $CH_3SO_2CH_2—$.

10. The copolymer of claim 8 wherein X is $CH_3SO_2CH_2—$ and X' is $CF_3CH_2O—$.

11. The copolymer of claim 8 wherein X is $CH_3SO_2CH_2—$ and X' is $p\text{-}ClC_6H_5O—$.

12. The copolymer of claim 8 wherein X is

$$—CHCH{=}CHCH_2SO_2 \text{ and X' is } CF_3CH_2O—.$$

13. A method of preparing polyphosphazene copolymers as claimed in claims 1 to 12, characterized by reacting a poly(dichlorophosphazene) polymer having the formula $—(NPCl_2)_n—$, wherein n is from 20 to 50,000, with a mixture consisting of a malononitrile or substituted malononitrile compound or a nitroalkane compound or a sulfone compound and an aliphatic alcohol, phenol, amine or mercaptan or mixture thereof, in the presence of a tertiary amine.

14. The method of claim 13 wherein said mixture is a mixture of a malononitrile compound and an aliphatic alcohol.

15. The method of claim 14 wherein said malononitrile compound is malononitrile and said aliphatic alcohol is trifluoroethanol.

16. The method of claim 13 wherein said mixture is a mixture of a malononitrile compound and a phenol.

17. The method of claim 16 wherein said malononitrile compound is malononitrile and said phenol is p-chlorophenol.

18. The method of claim 13 wherein said mixture is a mixture of a nitroalkane compound and an aliphatic alcohol.

19. The method of claim 18 wherein said nitroalkane compound is 2-nitropropane and said aliphatic alcohol is trifluoroethanol.

20. The method of claim 12 wherein said mixture is a mixture of a nitroalkane compound and a phenol.

21. The method of claim 20 wherein said nitroalkane compound is 2-nitropropane and said phenol is p-chlorophenol.

22. The method of claim 13 wherein said mixture is a mixture of a sulfone compound and an aliphatic alcohol.

23. The method of claim 22 wherein said sulfone compound is dimethyl sulfone and said aliphatic alcohol is trifluoroethanol.

24. The method of claim 22 wherein said sulfone compound is 2,5-dihydrothiophene 1,1-dioxide and said aliphatic alcohol is trifluoroethanol.

25. The method of claim 13 wherein said mixture is a mixture of a sulfone compound and a phenol.

26. The method of claim 25 wherein said sulfone compound is dimethyl sulfone and said phenol is p-chlorophenol.

27. The method of claim 13 wherein said tertiary amine is triethylamine.

## Patentansprüche

1. Polyphosphazencopolymeres, dadurch gekennzeichnet, daß es Einheiten der Formeln:

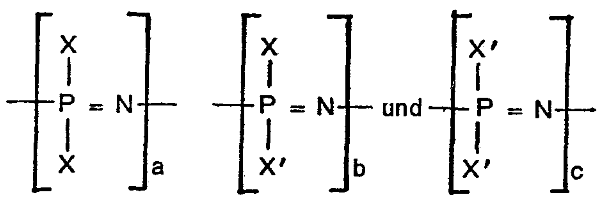

enthält, wobei X für ein —$CR(CN)_2$-Radikal oder ein —$CNO_2R_1R_2$-Radikal oder ein Sulfonradikal, ausgewählt aus der Gruppe, bestehend aus

$$—CR_4R_5—SO_2—R_3 \text{ und } —CHCH{=}CHCH_2SO_2$$

ist, wobei R für H, eine verzweigtkettige, geradkettige oder cyclische Alkylgruppe mit 1 bis 12 Kohlenstoffatomen oder eine Arylgruppe oder Gemische davon steht, $R_1$ und $R_2$ aus der Gruppe, bestehend aus H, einer verzweigten, geradkettigen und cyclischen Alkylgruppe mit 1 bis 12 Kohlenstoffatomen oder Gemischen davon, ausgewählt sind, $R_3$ für Alkyl mit 1 bis 12 Kohlenstoffatomen, Cycloalkyl mit 3 bis 12 Kohlenstoffatomen oder Aryl steht und $R_4$ und $R_5$ unabhängig voneinander aus der Gruppe, bestehend aus Wasserstoff, Alkylradikalen mit 1 bis 11 Kohlenstoffatomen, Cycloalkylradikalen mit 3 bis 11 Kohlenstoffatomen und Arylradikalen, ausgewählt sind, wobei X' für ein organisches Radikal, ausgewählt aus der Gruppe, bestehend aus substituierten und unsubstituierten Alkoxy-, Alkenyloxy-, Aryloxy-, Alkenylaryloxy-, Amino- und Mercaptogruppen, steht und wobei $20 \leq (a+b+c) \leq 50000$ pro Polymeres und wobei das Copolymeres mindestens 5 mol-%, auf das Gewicht bezogen, des X-Substituenten enthält.

2. Copolymeres nach Anspruch 1, dadurch gekennzeichnet, daß X für —$CR(CN)_2$ steht.

3. Copolymeres nach Anspruch 2, dadurch gekennzeichnet, daß der X-Substituent —$CH(CN)_2$ ist und daß der X'-Substituent —$OCH_2CF_3$ ist.

4. Copolymeres nach Anspruch 2, dadurch gekennzeichnet, daß der X-Substituent —$CH(CN)_2$ ist und daß der X'-Substituent —$OC_6H_4Cl$ ist.

5. Copolymeres nach Anspruch 1, dadurch gekennzeichnet, daß X für —$CNO_2R_1R_2$ steht.

6. Copolymeres nach Anspruch 5, dadurch gekennzeichnet, daß der X-Substituent —$CNO_2(CH_3)_2$ ist und daß der X'-Substituent —$OCH_2CF_3$ ist.

7. Copolymeres nach Anspruch 1, dadurch gekennzeichnet, daß der X-Substituent —$CNO_2(CH_3)_2$ ist und daß der X'-Substituent —$OC_6H_4Cl$ ist.

8. Copolymeres nach Anspruch 1, dadurch gekennzeichnet, daß X für

$$—CR_4R_5—SO_2—R_3 \text{ oder } —CHCH{=}CHCH_2SO_2 \text{ steht.}$$

9. Copolymeres nach Anspruch 8, dadurch gekennzeichnet, daß X für $CH_3SO_2CH_2$— steht.

10. Copolymeres nach Anspruch 8, dadurch gekennzeichnet, daß X für $CH_3SO_2CH_2$— steht und daß X' für $CF_3CH_2O$— steht.

11. Copolymeres nach Anspruch 8, dadurch gekennzeichnet, daß X für $CH_3SO_2CH_2$— und X′ für p-$ClC_6H_5O$— stehen.

12. Copolymeres nach Anspruch 8, dadurch gekennzeichnet, daß X für

$$—CHCH{=}CHCH_2SO_2 \text{ und } X' \text{ für } CF_3CH_2O— \text{ stehen.}$$

13. Verfahren zur Herstellung von Polyphosphazencopolymeren nach den Ansprüchen 1 bis 12, dadurch gekennzeichnet, daß man ein Poly-(dichlorphosphazen)-polymeres mit der Formel —$(NPCl_2)_n$—, worin n 20 bis 50000 ist, mit einem Gemisch, bestehend aus Malonnitril oder einer substituierten Malonnitrilverbindung oder eine Nitroalkanverbindung oder einer Sulfonverbindung und einem aliphatischen Alkohol, Phenol, Amin oder Mercaptan oder Gemisch davon, in Gegenwart eines tertiären Amins umsetzt.

14. Verfahren nach Anspruch 13, dadurch gekennzeichnet, daß das genannte Gemisch ein Gemisch aus einer Malonnitrilverbindung und einem aliphatischen Alkohol ist.

15. Verfahren nach Anspruch 14, dadurch gekennzeichnet, daß die genannte Malonnitrilverbindung Malonnitril ist und daß der genannte aliphatische Alkohol Trifluorethanol ist.

16. Verfahren nach Anspruch 13, dadurch gekennzeichnet, daß das genannte Gemisch ein Gemisch aus einer Malonnitrilverbindung und einem Phenol ist.

17. Verfahren nach Anspruch 16, dadurch gekennzeichnet, daß die genannte Malonnitrilverbindung Malonnitril ist und daß das genannte Phenol p-Chlorphenol ist.

18. Verfahren nach Anspruch 13, dadurch gekennzeichnet, daß das genannte Gemisch ein Gemisch aus einer Nitroalkanverbindung und einem aliphatischen Alkohol ist.

19. Verfahren nach Anspruch 18, dadurch gekennzeichnet, daß die genannte Nitroalkanverbindung 2-Nitropropan ist und daß der genannte aliphatische Alkohol Trifluorethanol ist.

20. Verfahren nach Anspruch 12, dadurch gekennzeichnet, daß das genannte Gemisch ein Gemisch aus einer Nitroalkanverbindung und einem Phenol ist.

21. Verfahren nach Anspruch 20, dadurch gekennzeichnet, daß die genannte Nitroalkanverbindung 2-Nitropropan ist und daß das genannte Phenol p-Chlorphenol ist.

22. Verfahren nach Anspruch 13, dadurch gekennzeichnet, daß das genannte Gemisch ein Gemisch aus einer Sulfonverbindung und einem aliphatischen Alkohol ist.

23. Verfahren nach Anspruch 22, dadurch gekennzeichnet, daß die genannte Sulfonverbindung Dimethylsulfon ist und daß der genannte aliphatische Alkohol Trifluorethanol ist.

24. Verfahren nach Anspruch 22, dadurch gekennzeichnet, daß die genannte Sulfonverbindung 2,5-Dihydrothiophen-1,1-dioxid ist und daß der genannte aliphatische Alkohol Trifluorethanol ist.

25. Verfahren nach Anspruch 13, dadurch gekennzeichnet, daß das genannte Gemisch ein Gemisch aus einer Sulfonverbindung und einem Phenol ist.

26. Verfahren nach Anspruch 25, dadurch gekennzeichnet, daß die genannte Sulfonverbindung Dimethylsulfon ist und daß das genannte Phenol p-Chlorphenol ist.

27. Verfahren nach Anspruch 13, dadurch gekennzeichnet, daß das genannte tertiäre Amin Triethylamin ist.

**Revendications**

1. Copolymère de polyphosphazène, caractérisé en ce qu'il contient des motifs représentés par les formules:

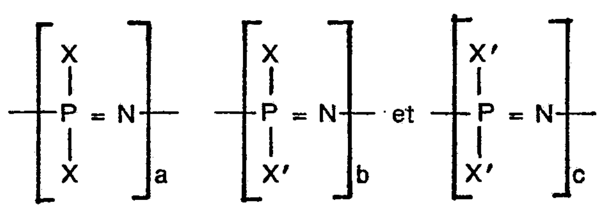

dans lesquelles X est un radical —$CR(CN)_2$ ou un radical —$\bar{C}HO_2R_1R_2$ ou un radical sulfone choisi entre des radicaux

$$—CR_4R_5—SO_2—R_3 \text{ et } —CHCH{=}CHCH_2SO_2,$$

formules dans lesquelles R représente H, un groupe alkyle à chaîne ramifiée, à chaîne droite ou cyclique contenant 1 à 12 atomes de carbone ou un groupe aryle ou des mélanges de ces groupes, $R_1$ et $R_2$ sont choisis entre H, un groupe alkyle ramifié, à chaîne droite ou cyclique contenant 1 à 12 atomes de carbone ou des mélanges de ces groupes, $R_3$ est un groupe alkyle contenant 1 à 12 atomes de carbone,

cycloalkyle contenant 3 à 12 atomes de carbone ou aryle et $R_4$ et $R_5$ sont choisis individuellement dans le groupe comprenant l'hydrogène, des radicaux alkyle contenant 1 à 11 atomes de carbone, des radicaux cycloalkyle contenant 3 à 11 atomes de carbone et des radicaux aryle; X' est un radical organique choisi entre des groupes alkoxy, alcényloxy, aryloxy, alcénylaryloxy, amino et mercapto substitués et non substitués et il existe par polymère la relation $20 \leq (a + b + c) \leq 50\,000$; et le copolymère contenant au moins 5 moles % en poids du substituant X.

2. Copolymère suivant la revendication 1, dans lequel X est un groupe $—CR(CN)_2$.

3. Copolymère suivant la revendication 2, dans lequel le substituant X est un groupe $—CH(CN)_2$ et le substituant X' est le groupe $—OCH_2CF_3$.

4. Copolymère suivant la revendication 2, dans lequel le substituant X est le groupe $—CH(CN)_2$ et le substituant X' est le groupe $—OC_6H_4Cl$.

5. Copolymère suivant la revendication 1, dans lequel X est un groupe $—CNO_2R_1R_2$.

6. Copolymère suivant la revendication 5, dans lequel le substituant X est le groupe $—CNO_2(CH_3)_2$ et le substituant X' est le groupe $—OCH_2CF_3$.

7. Copolymère suivant la revendication 1, dans lequel le substituant X est le groupe $—CNO_2(CH_3)_2$ et le substituant X' est le groupe $—OC_6H_4Cl$.

8. Copolymère suivant la revendication 1, dans lequel X est un groupe

$$—CR_4R_5—SO_2—R_3 \text{ ou le groupe } —\underline{CHCH{=}CHCH_2SO_2}.$$

9. Copolymère suivant la revendication 8, dans lequel X est le groupe $CH_3SO_2CH_2—$.

10. Copolymère suivant la revendication 8, dans lequel X est le groupe $CH_3SO_2CH_2—$ et X' est le groupe $CF_3CH_2O—$.

11. Copolymère suivant la revendication 8, dans lequel X est le groupe $CH_3SO_2CH_2—$ et X' est le groupe $p\text{-}ClC_6H_5O—$.

12. Copolymère suivant la revendication 8, dans lequel X est le groupe

$$—\underline{CHCH{=}CHCH_2SO_2} \text{ et X' est le groupe } CF_3CH_2O—.$$

13. Procédé de préparation de copolymères de polyphosphazène suivant les revendications 1 à 12, caractérisé par la réaction d'un polymère du type poly(dichlorophosphazène) de formule $—(NPCl_2)_n—$ dans laquelle *n* a une valeur de 20 à 50 000, avec un mélange formé d'un malononitrile ou d'un malononitrile substitué ou d'un nitroalcane ou d'une sulfone et d'un alcool aliphatique, d'un phénol, d'une amine ou d'un mercaptan ou d'un mélange de ces composés, en présence d'une amine tertiaire.

14. Procédé suivant la revendication 13, dans lequel ledit mélange est un mélange d'un malononitrile et d'un alcool aliphatique.

15. Procédé suivant la revendication 14, dans lequel ledit malononitrile est le malononitrile et ledit alcool aliphatique est le trifluoréthanol.

16. Procédé suivant la revendication 13, dans lequel ledit mélange est un mélange d'un malononitrile et d'un phénol.

17. Procédé suivant la revendication 16, caractérisé en ce que ledit malononitrile est le malononitrile et ledit phénol est le p-chlorophénol.

18. Procédé suivant la revendication 13, dans lequel ledit mélange est un mélange nitro-alcane et d'un alcool aliphatique.

19. Procédé suivant la revendication 18, dans lequel ledit nitro-alcane est le 2-nitropropane et ledit alcool aliphatique est le trifluoréthanol.

20. Procédé suivant la revendication 12, dans lequel ledit mélange est un mélange d'un nitroalcane et d'un phénol.

21. Procédé suivant la revendication 20, dans lequel ledit nitro-alcane est le 2-nitropropane et ledit phénol est le p-chlorophénol.

22. Procédé suivant la revendication 13, dans lequel ledit mélange est un mélange d'une sulfone et d'un alcool aliphatique.

23. Procédé suivant la revendication 22, dans lequel ladite sulfone est la diméthylsulfone et ledit alcool aliphatique est le trifluoréthanol.

24. Procédé suivant la revendication 22, dans lequel ladite sulfone est le 1,1-dioxyde de 2,5-dihydrothiophène et ledit alcool aliphatique est le trifluoréthanol.

25. Procédé suivant la revendication 13, dans lequel ledit mélange est un mélange d'une sulfone et d'un phénol.

26. Procédé suivant la revendication 25, dans lequel ladite sulfone est la diméthylsulfone et ledit phénol est le p-chlorophénol.

27. Procédé suivant la revendication 13, dans lequel ladite amine tertiaire est la triéthylamine.